# EUROPÄISCHE PATENTSCHRIFT

(11) **EP 0 843 843 B1**
(45) Veröffentlichungstag und Bekanntmachung des Hinweises auf die Patenterteilung: **03.11.1999**
(21) Anmeldenummer: 96928325.8
(22) Anmeldetag: 24.07.1996
(51) Int. Cl.: G05B 19/042

(54) **AUF EINER BAUGRUPPE ANGEORDNETE PUFFERSCHALTUNG**
BUFFER CIRCUIT ON A MODULE
CIRCUIT TAMPON MONTE SUR UN MODULE

(30) Priorität: 11.08.1995 DE 19529718
(43) Veröffentlichungstag der Anmeldung: 27.05.1998
(73) Patentinhaber: SIEMENS AKTIENGESELLSCHAFT, 80333 München (DE)
(72) Erfinder: TRETTER, Albert, D-92718 Schirmitz (DE); WEBER, Karl, D-90518 Altdorf (DE); KREMER, Karl-Theo, D-91325 Adelsdorf (DE)
(86) Internationale Anmeldenummer: DE9601367
(87) Internationale Veröffentlichungsnummer: WO9707442

(56) Entgegenhaltungen:
- EP-A- 0 622 712
- WO-A-86/04701
- WO-A-90/09474
- WO-A-91/14324
- GB-A- 2 283 836

## Beschreibung

Die vorliegende Erfindung betrifft eine auf einer Baugruppe angeordnete Pufferschaltung zum Zwischenspeichern von Daten.

In der Automatisierungstechnik werden mehr und mehr dezentrale Systeme eingesetzt. Hierbei werden von dezentralen Peripheriebaugruppen der Steuerungstechnik Eingangssignale von einem kontrollierten technischen Prozeß eingelesen und an eine entfernt von den Baugruppen angeordnete, übergeordnete Recheneinheit übermittelt. Die Recheneinheit kann beispielsweise die Zentraleinheit einer speicherprogrammierbaren Steuerung sein. Die Recheneinheit verarbeitet dann die Eingangssignale und ermittelt aus den Eingangssignalen, gegebenenfalls unter Verwendung weiterer, Recheneinheit interner Werte, Ausgangssignale, welche dann erneut über den Feldbus an die dezentralen Peripheriebaugruppen weitergegeben werden. Diese geben die Ausgangssignale dann an den kontrollierten technischen Prozeß aus.

Das Einlesen der Eingangssignale vom technischen Prozeß und das Ausgeben der Ausgangssignale an den technischen Prozeß erfolgt in den Peripheriebaugruppen mittels intelligenter Einheiten, z.B. Mikroprozessoren. Die intelligenten Einheiten nehmen dabei im wesentlichen nur diese eine Aufgabe des Einlesens und Ausgebens der Signale wahr.

Die Zykluszeit, welche die intelligente Einheit der Peripheriebaugruppe zum Einlesen der Eingangssignale und zum Auslesen der Ausgangssignale benötigt, ist üblicherweise deutlich verschieden von der Zeit, die zwischen zwei Zugriffsperioden der übergeordneten Recheneinheit auf die Eingangssignale bzw. die Ausgangssignale vergeht. Die Eingangs- und Ausgangssignale können daher nicht sofort von der intelligenten Einheit und umgekehrt weitergeleitet werden, sondern müssen in den dezentralen Peripheriebaugruppen zwischengespeichert werden.

Aus der GB 2 283 836 ist eine Schaltung zur Verbindung einer übergeordneten Steuereinheit mit intelligenten Einheiten zur Prozeßsteuerung und/oder Überwachung bekannt. Die Schaltung weist eine Busschnittstelle zum Kommunizieren mit der übergeordneten Steuereinheit und zwei Baugruppenschnittstellen zum Kommunizieren mit den intelligenten Einheiten auf. Fünf Speicherbereiche sind jeweils in Empfangs- und Sendepuffer unterteilt. Diese Puffer werden entweder durch einen Interup-Mechanismus, durch einen Polling-Mechanismus oder durch einen Flag-gesteuerten Mailbox-Mechanismus verwaltet.

Die Aufgabe der vorliegenden Erfindung besteht darin, eine Schaltungsanordnung anzugeben, mittels derer trotz Zwischenspeicherung die übergeordnete Recheneinheit und die intelligente Einheit der dezentralen Peripheriebaugruppe einerseits völlig unabhängig voneinander Daten in einen Zwischenspeicher einschreiben bzw. aus dem Zwischenspeicher auslesen können und sich andererseits mit Sicherheit nicht gegenseitig blokkieren können.

Die Aufgabe wird durch eine Pufferschaltung mit den Merkmalen des Anspruchs 1 gelöst.

Die Pufferschaltung ist üblicherweise in einem integrierten Schaltkreis, einem Kommunikations-ASIC, angeordnet. Der Kommunikations-ASIC nimmt im Regelfall noch andere Kommunikationsaufgaben wahr, für die er ebenfalls Speicherplatz bereitstellen muß. Da Speicherplatz bei ASICs auch heute noch eine teure und knappe Ressource darstellt, kann der anderweitig zur Verfügung stellbare Speicherbereich maximiert werden, wenn die Speicherbereiche der Pufferschaltung eine variable Länge aufweisen.

Einzelheiten ergeben sich aus der nachfolgenden Beschreibung eines Ausführungsbeispiels. Dabei zeigen:
FIG 1 ein verteiltes Automatisierungssystem und
FIG 2 eine Pufferschaltung.

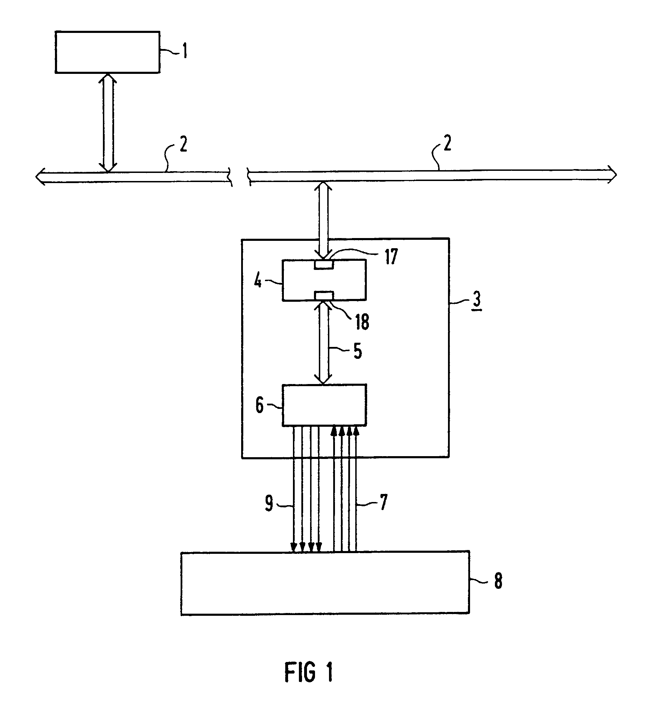

Gemäß FIG 1 ist die Zentraleinheit 1 einer speicherprogrammierbaren Steuerung über den Feldbus 2 mit dezentralen Peripheriebaugruppen 3 verbunden. In FIG 1 ist der Übersichtlichkeit halber dabei nur eine der Peripheriebaugruppen 3 dargestellt.

Die Peripheriebaugruppe 3 weist einen anwendungsspezifischen integrierten Schaltkreis (ASIC) 4 auf, der einerseits mit dem Feldbus 2 und andererseits über baugruppeninterne Verbindungen 5 mit einem Mikroprozessor 6 verbunden ist. Der Mikroprozessor 6 stellt die auf der Baugruppe 3 angeordnete intelligente Einheit dar.

Der Mikroprozessor 6 ist über Eingabeleitungen 7 mit nicht dargestellten Prozeßsensorelementen eines technischen Prozesses 8, z.B. einer Brennersteuerung, verbunden. Ebenso ist der Mikroprozessor 6 über Ausgabeleitungen 9 mit ebenfalls nicht dargestellten Prozeßstellgliedern des technischen Prozesses 8 verbunden.

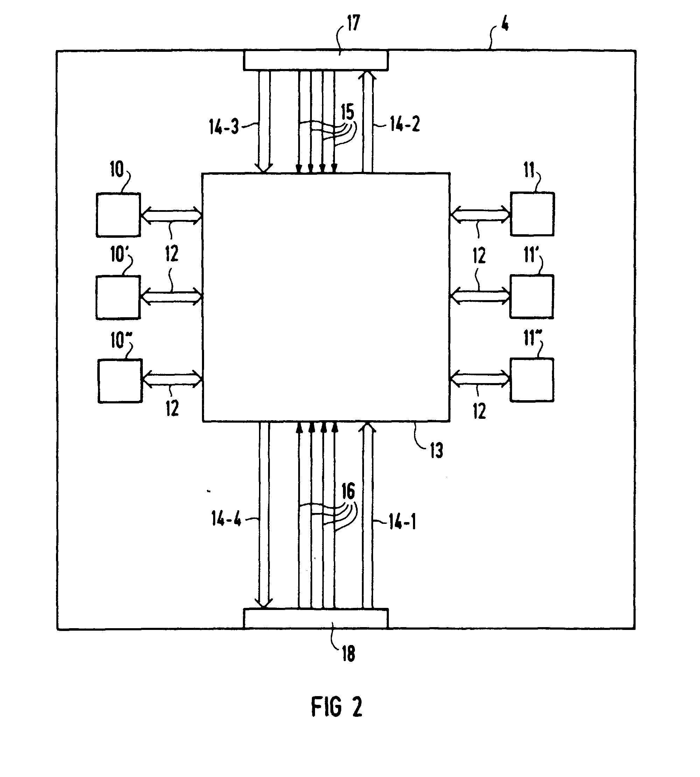

Der in FIG 2 detailliert dargestellte Kommunikations-ASIC 4 beinhaltet die Pufferschaltung zum Zwischenspeichern von Eingangs- und Ausgangssignalen. Gemäß FIG 2 weist der ASIC 4 drei Eingangssignalspeicherbereiche 10,10' und 10" sowie drei Ausgangssignalspeicherbereiche 11,11' und 11" auf. Die Speicherbereiche 10,10',10",11,11',11" sind über Busse 12 mit einer Auswahlschaltung 13 verbunden, welche ihrerseits über Busse 14 und Steuerleitungen 15,16 mit einer Busschnittstelle 17 und einer Baugruppenschnittstelle 18 verbunden ist.

In den Eingangssignalspeicherbereichen 10,10',10" werden Eingangssignale, welche der Mikroprozessor 6 vom technischen Prozeß 8 einliest, über die Baugruppenschnittstelle 18 und den Bus 14-1 der Auswahlschaltung 13 zugeführt, welche die Eingangssignale dann in einem der Speicherbereiche 10,10',10" abspeichert. Von dort werden die Eingangssignale dann später über die Auswahlschaltung 13, den Bus 14-2 und die Busschnittstelle 17 an den Feldbus 2 und die Zentraleinheit 1 übermittelt. Umgekehrt werden von der Zentraleinheit 1 über den Feldbus 2, die Busschnittstelle 17, den Bus 14-3 und die Auswahlschaltung 13 Ausgangssignale in den Speicherbereichen 11,11',11" abgelegt. Diese werden dann später über die Auswahlschaltung 13, den Bus 14-4 und die Baugruppenschnittstelle 18 vom Mikroprozessor 6 abgerufen und an den technischen Prozeß 8 ausgegeben.

Aus dem Obenstehenden ist ersichtlich, daß jede Schnittstelle 17,18 mit jedem der Speicherbereiche 10,10',10",11,11',11" verbindbar ist. Zu einem beliebigen Zeitpunkt ist die Busschnittstelle 17 aber nur mit einem der Eingangssignalspeicherbereiche 10,10',10" und einem der Ausgangssignalspeicherbereiche 11,11',11" verbunden. Die Baugruppenschnittstelle 18 ist ebenso mit einem anderen der Eingangssignalspeicherbereiche 10,10',10" und einem anderen der Ausgangssignalspeicherbereiche 11,11',11" verbunden. Beispielsweise kann zu einem bestimmten Zeitpunkt die Busschnittstelle 17 mit den Speicherbereichen 10 und 11 verbunden sein, während die Baugruppenschnittstelle 18 mit den Speicherbereichen 10" und 11" verbunden ist.

Wie in der Steuerungstechnik allgemein bekannt ist, werden beim Datentransfer nicht einzelne Daten aktualisiert, sondern stets nur die Gesamtheit der Eingangs- bzw. Ausgangssignale. Dies ist erforderlich, um die Eingangs- und Ausgangssignale konsistent zueinander zu halten. Beim Vorhandensein nur eines der Eingangssignalspeicherbereiche 10,10',10" könnten daher während des Einschreibens von Signalen durch den Mikroprozessor 6 nicht gleichzeitig Daten an die Zentraleinheit 1 übermittelt werden. Die Zentraleinheit 1 müßte also warten, bis der Einschreibvorgang durch den Mikroprozessor 6 abgeschlossen ist. Ebenso müßte, wenn Daten gerade aus dem Eingangssignalspeicherbereich 10 ausgelesen werden, der Mikroprozessor 6 warten, bis das Auslesen abgeschlossen ist. Mikroprozessor 6 und Zentraleinheit 1 müßten also bei der Übermittlung von Eingangssignalen aufeinander warten. Das gleiche gilt in analoger Weise auch für die Übertragung von Ausgangssignalen von der Zentraleinheit 1 zum Mikroprozessor 6.

Beim Vorhanden zweier Eingangssignalspeicherbereiche kann zwar der Mikroprozessor 6 Eingangssignale in einem der Eingangssignalspeicherbereiche, z.B. dem Speicherbereich 10', ablegen, während aus dem anderen Speicherbereich, z.B. dem Speicherbereich 10, Signale ausgelesen und an die Zentraleinheit 1 übermittelt werden. Die Datenübermittlung vom Mikroprozessor 6 zu den Speicherbereichen 10,10' und weiter zur Zentraleinheit 1 ist also scheinbar entkoppelt.

Die Entkopplung ist aber, wie erwähnt, nur scheinbar. Es sei beispielsweise angenommen, daß zum Zeitpunkt t₀ Eingangssignale aus dem Speicherbereich 10 ausgelesen und an die Zentraleinheit 1 übermittelt werden, während umgekehrt der Mikroprozessor 6 Eingangssignale in den Speicherbereich 10' einschreibt. Zu diesem Zeitpunkt sind Einschreiben und Auslesen von Eingangssignalen voneinander entkoppelt. Aller Wahrscheinlichkeit nach enden der Einschreibezyklus und der Auslesezyklus aber nicht gleichzeitig. Beispielsweise ist zum Zeitpunkt t₁ der Einschreibezyklus des Mikroprozessors 6 beendet, während der Auslesezyklus zur Zentraleinheit 1 noch andauert. Wenn zu diesem Zeitpunkt t₁ dann der Mikroprozessor 6 neue Eingangssignale einliest und zwischenspeichern will, steht ihm der Speicherbereich, aus dem die Zentraleinheit 1 ihre Daten ausliest, also der Speicherbereich 10, nicht zur Verfügung, da ansonsten die Gefahr von Dateninkonsistenzen besteht. Wenn der Mikroprozessor 6 dagegen in den zweiten Speicherbereich einschreibt, den er unmittelbar zuvor beschrieben hat, also den Speicherbereich 10', besteht die Gefahr, daß während dieses Einschreibezyklusses das Auslesen durch die Zentraleinheit 1 beendet wird. Die Zentraleinheit 1 kann dann nicht mit dem nächsten Auslesezyklus starten, da sie entweder die bereits ausgelesenen, ihr bereits bekannten Daten erneut lesen müßte, was sinnlos ist, oder aber sie aus einem Speicherbereich lesen müßte, der gerade überschrieben wird, was wegen der Gefahr von Dateninkonsistenzen nicht zulässig ist. Auch mit zwei Speicherbereichen pro Übertragungsrichtung ist der Datenverkehr noch nicht voneinander entkoppelt.

Durch die Bereitstellung eines dritten Speicherbereichs pro Übertragungsrichtung, also von je drei Eingangssignalspeicherbereichen 10,10'10" und je drei Ausgangssignalspeicherbereichen 11,11',11", wird das Problem gelöst. In diesem Fall steht nämlich zu jedem Zeitpunkt garantiert ein Speicherbereich zur Verfügung, in den neue Daten eingeschrieben werden können, ohne die unmittelbar zuvor geschriebenen Daten zu überschreiben.

Die Selektion der Speicherbereiche 10,10',10",11,11',11" durch die Auswahlschaltung 13 kann beispielsweise dadurch erfolgen, daß der Auswahlschaltung 13 über die Steuerleitungen 15 und 16 mitgeteilt wird, wann ein neuer Lese- bzw. Schreibvorgang beginnt und endet. Die Auswahlschaltung 13 kann dann, z.B. durch Addieren einer geeigneten Offsetadresse zum momentan auszulesenden Speicherplatz gewährleisten, daß aus dem gewünschten der Speicherbereiche 10,10',10",11,11',11" ausgelesen wird.

Die Pufferschaltung ist, wie bereits obenstehend erwähnt, üblicherweise in einem Kommunikations-ASIC 4 angeordnet. Der Kommunikations-ASIC 4 nimmt üblicherweise neben dem Prozeßabbildtransfer, also dem Transfer der Eingangs- und der Ausgangssignale, noch andere Kommunikationsaufgaben wahr, welche ebenfalls Speicherplatz beanspruchen. Zur Optimierung des Kommunikations-ASICs ist es daher von Vorteil, wenn die Speicherbereiche 10,10',10",11,11',11" eine variable Länge aufweisen. In diesem Fall kann nämlich die Speicherlänge dem tatsächlich benötigten Bedarf angepaßt werden, so daß nicht benötigter Speicherbereich anderen Kommunikationsaufgaben zugeordnet werden kann. Beispielsweise ist es möglich, der Auswahlschaltung 13 vorzugeben, wie viele Byte jeder der Eingangssignalspeicherbereiche 10,10',10" und wie viele Byte jeder der Ausgangssignalspeicherbereiche 11,11',11" benötigt.

## Patentansprüche

1. Auf einer Baugruppe (3) angeordnete Pufferschaltung, mit
- mindestens drei Eingangssignalspeicherbereichen (10,10',10") zum Zwischenspeichern von Eingangssignalen,
- mindestens drei Ausgangssignalspeicherbereichen (11,11',11") zum Zwischenspeichern von Ausgangssignalen,
- einer Busschnittstelle (17) zum Kommunizieren mit einer der Baugruppe (3) übergeordneten, von der Baugruppe (3) entfernt angeordneten Einheit (1) über einen Bus (2), und
- einer Baugruppenschnittstelle (18) zum Kommunizieren mit einer auf der Baugruppe (3) angeordneten intelligenten Einheit (6), die zur Kontrolle eines technischen Prozesses (8) mit Prozeßsensorelementen und Prozeßstellgliedern verbindbar ist, **gekennzeichnet** durch
- eine mit der Busschnittstelle (17), der Baugruppenschnittstelle (18) sowie den Eingangs-(10,10',10") und Ausgangssignalspeicherbereichen (11,11',11") verbundene Auswahlschaltung (13), die derart ausgestaltet ist, daß jede Schnittstelle (17,18) mit jedem Speicherbereich (10,10',10",11,11',11") verbindbar ist, wobei zu einem beliebigen Zeitpunkt die Busschnittstelle (17) mit je einem der Eingangs-(10,10',10") und Ausgangssignalspeicherbereiche (11,11',11") und die Baugruppenschnittstelle (18) mit je einem anderem der Eingangs- (10,10',10") und Ausgangssignalspeicherbereiche (11,11',11") verbunden ist.

2. Pufferschaltung nach Anspruch 1, **dadurch gekennzeichnet**, daß die Speicherbereiche (10,10',10",11,11',11") eine variable Länge aufweisen.

3. Pufferschaltung nach Anspruch 2, **dadurch gekennzeichnet**, daß der minimale Unterschied zwischen zwei voneinander verschiedenen Speicherbereichslängen ein Byte ist.

4. Pufferschaltung nach Anspruch 1, 2 oder 3,
**dadurch gekennzeichnet**, daß sie in einen integrierten Schaltkreis (4) integriert ist.

## Claims

1. Butter circuit arranged on a module (3), having
- at least three input signal memory areas (10,10',10") for the intermediate storage of input signals,
- at least three output signal memory areas (11,11',11") for the intermediate storage of output signals,
- a bus interface (17) for communicating with a unit (1), of a higher level than the module (3) and arranged at a distance from the module (3), by way of a bus (2), and
- a module interface (18) for communicating with an intelligent unit (6) arranged on the module (3), which unit can be connected to process sensor elements and process actuators for the control of a technical process (8), characterized by
- a selection circuit (13) connected to the bus interface (17), the module interface (18) and the input signal memory areas (10,10',10") and output signal memory areas (11,11',11"), which selection circuit (13) is designed in such a way that each interface (17,18) can be connected to each memory area (10,10',10",11,11',11"), wherein at any instant the bus interface (17) is connected to a respective one of the input signal memory areas (10,10',10") and output signal memory areas (11, 11',11") and the module interface (18) is connected to a respective other one of the input signal memory areas (10,10',10") and output signal memory areas (11,11',11").

2. Buffer circuit according to claim 1,
characterized in that the memory areas (10, 10',10",11,11',11") have a variable length.

3. Buffer circuit according to claim 2,
characterized in that the minimum difference between two different memory area lengths is one byte.

4. Buffer circuit according to claim 1, 2 or 3,
characterized in that it is integrated into an integrated switching circuit (4).

## Revendications

1. Circuit tampon monté sur un module (3), comportant
- au moins trois zones de mémoire de signaux d'entrée (10, 10', 10") pour la mémorisation temporaire de signaux d'entrée,
- au moins trois zones de mémoire de signaux de sortie (11, 11', 11") pour la mémorisation temporaire de signaux de sortie,
- une interface de bus (17) pour la communication par l'intermédiaire d'un bus (2) avec une unité (1) supérieure au module (3) et montée à distance du module (3), et
- une interface de module (18) pour la communication avec une unité intelligente (6) qui est montée sur le module (3) et qui peut être reliée à des éléments capteurs de l'opération et à des actionneurs d'opération en vue du contrôle d'une opération technique (8),
caractérisé par
- un circuit de sélection (13) qui est relié à l'interface de bus (17), à l'interface de module (18) ainsi qu'aux zones de mémoire de signaux d'entrée (10, 10', 10") et aux zones de mémoire de signaux de sortie (11, 11', 11") et qui est conçu de telle sorte que chaque interface (17, 18) peut être reliée à chaque zone de mémoire (10, 10', 10", 11, 11', 11"), l'interface de bus (17) étant reliée, à un instant quelconque, à chaque fois à l'une des zones de mémoire de signaux d'entrée (10, 10', 10") et à l'une des zones de mémoire de signaux de sortie (11, 11', 11") et l'interface de module (18) étant reliée, à un instant quelconque, à chaque fois à une autre des zones de mémoire de signaux d'entrée (10, 10', 10") et à une autre des zones de mémoire de signaux de sortie (11, 11', 11").

2. Circuit tampon selon la revendication 1, caractérisé par le fait que les zones de mémoire (10, 10', 10", 11, 11', 11") ont une longueur variable.

3. Circuit tampon selon la revendication 2, caractérisé par le fait que la différence minimale entre deux longueurs de zone de mémoire différentes l'une de l'autre est un octet.

4. Circuit tampon selon la revendication 1, 2 ou 3, caractérisé par le fait qu'il est intégré dans un circuit intégré (4).
